# EUROPEAN PATENT APPLICATION

(11) **EP 2 383 275 A1**
(43) Date of publication of application: **02.11.2011**
(21) Application number: 09831365.3
(22) Date of filing: 21.01.2009
(51) Int. Cl.: C07F 9/50

(54) **METHOD FOR SYNTHESIZING O-DIPHENYLPHOSPHINO BENZOIC ACID**

(30) Priority: 12.12.2008 CN 200810239594
(71) Applicant: Sinomax Chemical Technology Co., Ltd, Beijing 100070 (CN); Sinomax Solutions Co., Ltd., Beijing 100022 (CN)
(72) Inventor: GAO, Jianxun, Beijing 100070 (CN); LUO, Junlu, Beijing 100070 (CN); WANG, Bibo, Beijing 100070 (CN); WANG, Yamin, Beijing 100070 (CN); DONG, Hongrong, Beijing 100070 (CN); ZHOU, Dong, Beijing 100070 (CN); XU, Lei, Beijing 100070 (CN); SHI, Jinbiao, Beijing 100070 (CN)
(74) Representative: Schüssler, Andrea
(86) International application number: PCT/CN2009/000089
(87) International publication number: WO 2010/066088

(57) **Abstract**

The present invention relates to a method for synthesis of *o*-diphenylphosphinobenzoic acid which includes the steps as follows: using chlorodiphenylphosphine as starting material, chlorodiphenylphosphine and alkali metal are added to the solvent to conduct cracking, which produces a diphenyl phosphine alkali metal salt, then *o*-chlorobenzoic acid salt or *o*-chlorobenzoic acid ester is added to conduct coupling reaction to produce diphenylphosphinobenzoic acid salt or diphenylphosphinobenzoic acid ester, *o*-diphenylphosphinobenzoic acid is obtained after hydrolysis. *o*-diphenylphosphinobenzoic acid can be prepared under atmospheric pressure at tempreture above 0°C by using the present method. The method is safe and stable to operate and can save a lot of energy, thus being suitable for large-scale production.

## Description

### TECHNICAL FIELD

The present invention relates to a method for synthesis of *o*-diphenylphosphinobenzoic acid.

### BACKGROUND ART

*o*-diphenylphosphinobenzoic acid, which is a bidentate hybrid water-soluble organic phosphine-type water-soluble phosphine ligand, can complex with rhodium, nickel and other transition metals to form complex as catalyst in homogeneous reaction. The design of water-soluble phosphine ligand catalyst can solve a core issue present in the homogeneous complex catalysts, namely, the separation of transition metal catalyst and product as well as the catalyst recycling. In 1970s, the famous SHOP method successfully synthesized α-olefins by catalyzing ethylene oligomerization with P-O bidentate complex, wherein the reaction conditions were mild and raw materials can be completely transformed into useful products, thus solving the difficulty in separating the product and catalyst during coordination catalysis process, creating a successful precedent to change homogeneous catalysis to multi-phase catalysis. The method is a model of green chemical industry and has become an important milestone in the history of the development of coordination catalysts, thus making such type of catalyst be widely used in the oil refining industry. At present, extensive researches on this type of catalyst have been carried out by several large oil companies such as Shell, Exxonmobile and so on, also such catalyst has been applied to industrial production, current annual demand in the oil refining industry has reached over 200 tons and shows a rapid growth trend. In addition, being a specific catalyst, it has good applied prospects in some fields of drug development. Issleib et al. (Anorg. Allg. Chem. 1967, 353,197-199) first reported a method for synthesis of *o*-diphenylphosphinobenzoic acid by cracking PPh₃ with Na or K in which the reactions were violent and the yield was low. Hoots *et al.* (Inorg. Synth. 1982, 21-178-179) attempted to synthesize *o*-diphenylphosphinobenzoic acid by cracking PPh₃ with Na in liquid ammonia at -78 °C with a yield of 50%. However, the reaction conditions were very harsh, this kind of absolute low temperature made operation become very difficult in the process of production, a large number of volatile liquid ammonia caused great pollution to the environment and inflicted serious harm on workers, therefore, commercial scale production was almost not likely to be carrried out.

In recent years, Stadler et al. (Org. Lett., 2002, 4 (20), 3541-3543) adopted catalytic method to synthesize *o*-diphenylphosphinobenzoic acid by using catalyst Pd to catalyze HPPh₂ and *o*-iodobenzoic acid at 180°C, in which not only raw materials were expensive, but also the yield was only 26%, thus resulting in high product costs. Furthermore, HPPh₂ is easily oxidized and even spontaneously combusts in the process of industrial production, which puts the production in danger, therefore, this process route has no competitive capacity in the industrial production of *o*-diphenylphosphinobenzoic acid.

Guo Meng-ping et al. (Journal of Yichun College (Natural Science), 2007, 29 (4), 12) reported a process of cracking PPh₃ with lithium at 20 ± 2°C, we repeatedly carried out this route, but it was found that 50% yield reported in the literature was difficult to achieve. Also when *o*-chlorobenzoic acid was added slowly, a lot of impurities were generated, the yield was very low. If *o*-chlorobenzoic acid was added to the reaction system rapidly, there would be potential safety problems since material splash was prone to occur due to sharply increasing temperature and poor operational controllability.

### SUMMARY OF INVENTION

The objective of the present invention is to overcome the deficiencies in prior art and provide a method of preparing *o*-diphenylphosphinobenzoic acid under atmospheric pressure at tempreture above 0 °C by using chlorodiphenylphosphine as starting material. The method is safe and stable to operate and can save a lot of energy, thus being suitable for large-scale production.

The method for synthesis of *o*-diphenylphosphinobenzoic acid in the present invention includes the steps as follows: using chlorodiphenylphosphine as starting material, chlorodiphenylphosphine and alkali metal are added to a solvent to conduct cracking reaction, which produces a diphenyl phosphine alkali metal salt, then *o*-chlorobenzoic acid salt or *o*-chlorobenzoic acid ester is added to conduct coupling reaction to produce diphenylphosphinobenzoic acid salt or diphenylphosphinobenzoic acid ester, *o*-diphenylphosphinobenzoic acid is obtained after hydrolysis.

Specific reaction scheme is as follows:

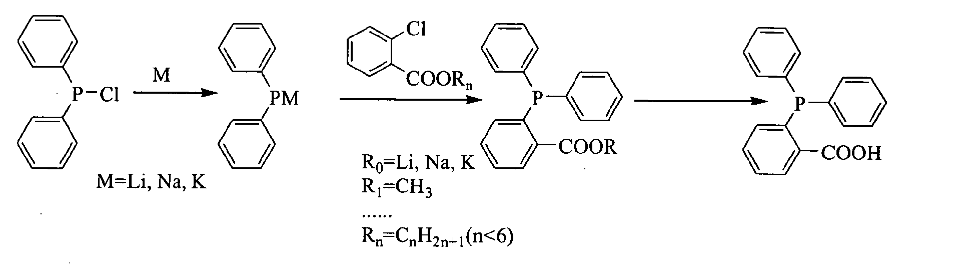

Wherein, the said cracking reaction time is 1 - 6h.

The said cracking can be carried out by the way of reflux reaction, in order to improve reaction effects and reduce reaction time.

The said alkali metal can be lithium, sodium or potassium, or a combination of any ratio of these substances.

Preferably, the said solvent is selected from ethers, such as tetrahydrofuran, 2-methyltetrahydrofuran, n-butylether, or 1,4-dioxane and so on.

The molar ratio of the said chlorodiphenylphosphine and alkali metal can be 1:2∼1:6, preferably, 1:3∼1:4, in the preferred ratio, the cracking can be fully completed, and there remain little excessive alkali metal residues.

The volume mass ratio (ml/g) of the said solvent and chlorodiphenylphosphine is 3:1∼15:1, preferably, 5:1∼12:1, more preferably, 8:1∼10:1, using such preferred ratios is not only advantageous to fully disperse the reaction substrates, but also does not lead to energy losses or environment pollution caused by a large number of solvent recovery.

The cracking reaction temperature can be 20∼110 °C, preferably, 30∼100°C, further preferably, 50∼100 °C , the most preferably, 80∼90 °C . Using these preferred temperatures is advantageous to ensure the full cracking of chlorodiphenylphosphine and further enhance operational safety. But for ease of operation the reaction can also be carried out at room temperature.

The said coupling reaction time is 2 - 24h. The reaction temperature can be 0 - 60°C, preferably, 10 ∼ 90°C, further preferably, 20 ∼ 50°C, much more preferably, 20 - 30 °C . Using these preferred temperatures is advantageous to ensure the full cracking of chlorodiphenylphosphine and further enhance operational safety. But for ease of operation the reaction can also be carried out at room temperature.

The said *o*-chlorobenzoic acid salt can be lithium *o*-chlorobenzoate, sodium *o*-chlorobenzoate, or potassium *o*-chlorobenzoate and so on.

The said *o*-chlorobenzoic acid ester can be methyl *o*-chlorobenzoate, ethyl *o*-chlorobenzoate, propyl *o*-chlorobenzoate, butyl *o*-chlorobenzoate, or amyl *o*-chlorobenzoate and so on.

The molar ratio of the added *o*-chlorobenzoic acid salt or *o*-chlorobenzoic acid ester and chlorodiphenylphosphine can be 1:1 ∼ 4:1, preferably, 2:1 ∼ 3:1, further preferably, 2.5:1 ∼ 3:1.

*o*-chlorobenzoic acid salt or ester can be added by the way of add-on or add-back.

The said hydrolysis can be carried out in the acid or alkali system. That is, the hydrolysis can be carried out by the way of acid hydrolysis, also can be carried out by the way of alkali hydrolysis, the said acid or alkali can be any acid or alkali suitable for hydrolysis, such as sulfuric acid, hydrochloric acid, phosphoric acid and acetic acid, etc., or sodium hydroxide, potassium hydroxide, potassium carbonate, sodium methylate, and sodium ethylate and other alkali.

The synthetic processes of *o*-diphenylphosphinobenzoic acid in the present invention are all carried out under atmospheric pressure.

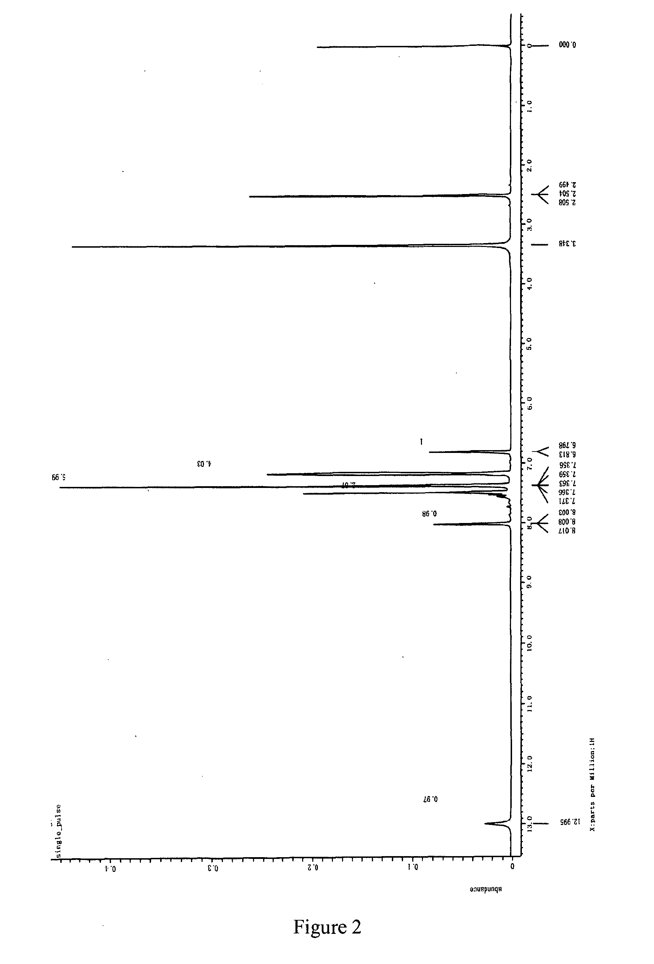

The method for synthesis of *o*-diphenylphosphinobenzoic acid in the present invention has the following advantageous effects: the starting materials are inexpensive and industrialized chlorodiphenylphosphine and *o*-chlorobenzoic acid, which is beneficial to ensure supply of raw materials and reduce the cost of production; a variety of reactions can be carried out at atmospheric pressure, along with simple processes, less energy consumption, and convenient operation, which makes the present method is suitable for industrial-scale production; the products have high yield, generally can reach 50 ∼ 75%; and the product quality is good, the testing results of products showed HPLC normalized purity was above 99%, oxide content was less than 0.5%, a single unknown impurity was less than 0.2%. Verification via pilot test in a 50L reactor showed the effect was very good, in which the test results of the products using spectra were shown in Figures 2 ∼ 5.

### DESCRIPTION OF DRAWINGS

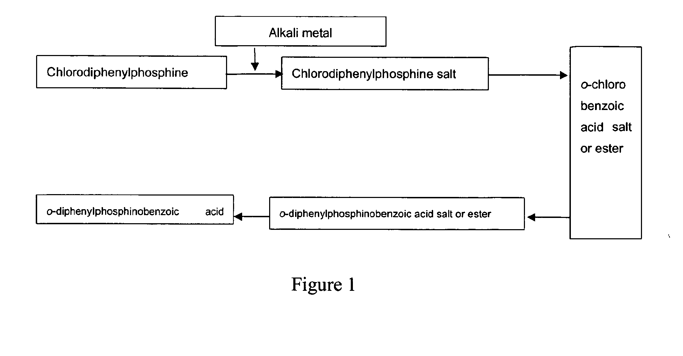

Figure 1 is synthesis flow diagram of preparation of *o*-diphenylphosphinobenzoic acid of the present invention;
Figure 2 is 1 H NMR spectrum of the product in example 15 of the present invention;

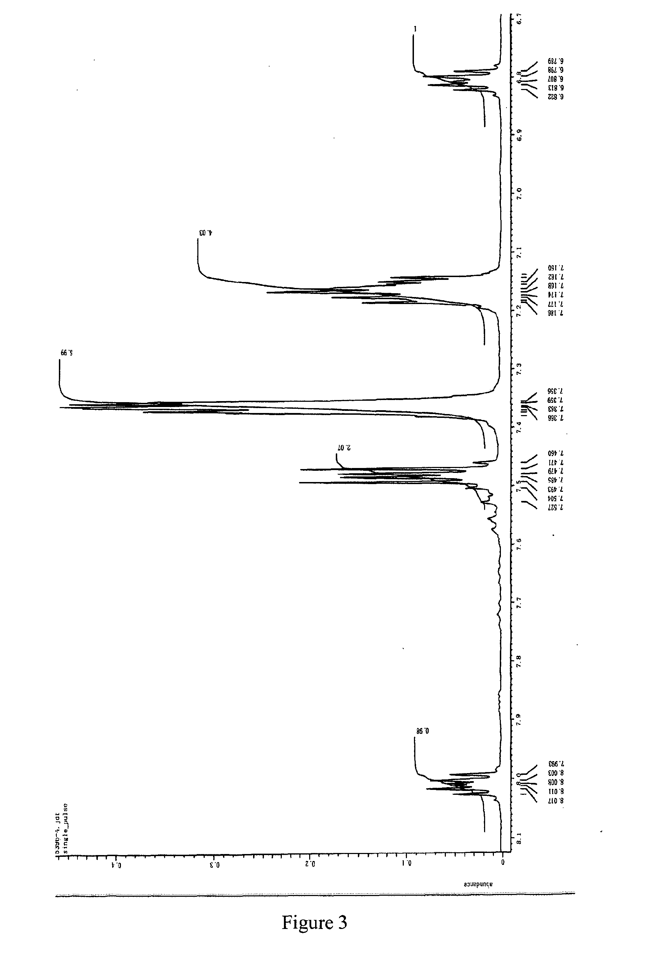

Figure 3 is 1H NMR partial enlarged spectrum of the product in example 15 of the present invention;

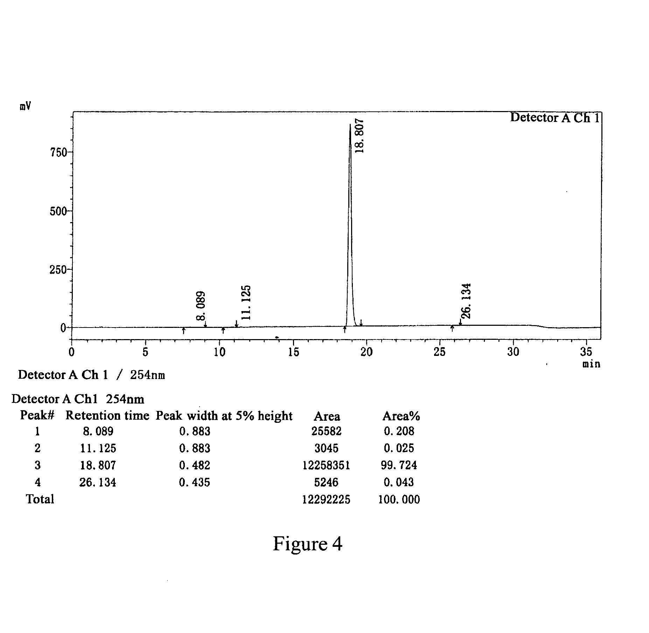

Figure 4 is MS spectrum of the product in example 15 of the present invention;

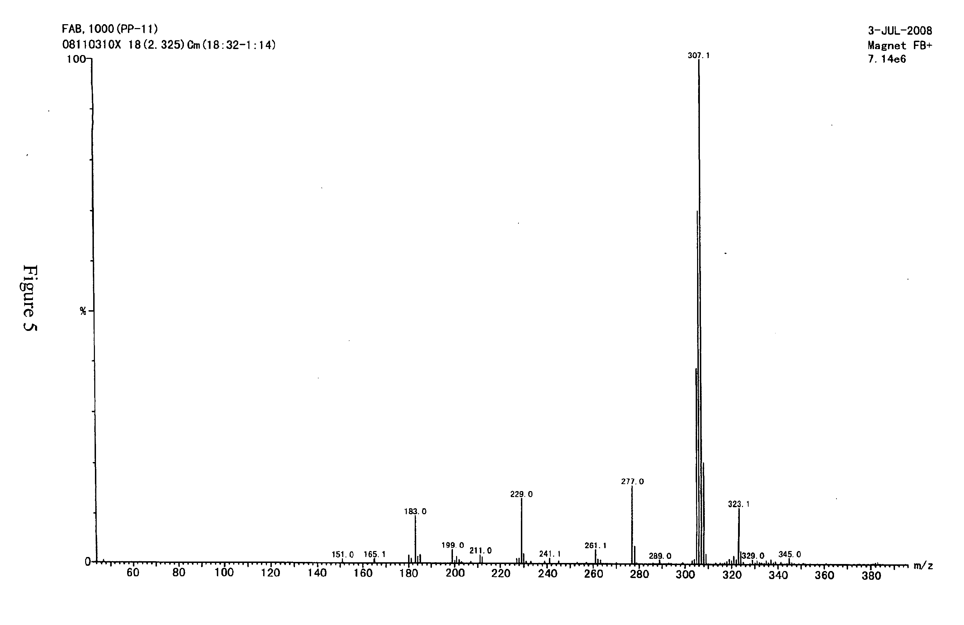

Figure 5 is HPLC chromatogram of the product in example 15 of the present invention.

### SPECIFIC MODE OF CARRYING OUT THE INVENTION

The present invention will be further illustrated in combination with specific examples. It should be understood that these examples are only intended to explain the present invention without limiting the scope of protection of the invention.

### Example 1

To 250ml three-necked bottle were added 50ml tetrahydrofuran and 1.0g metallic sodium, 4.4g chlorodiphenylphosphine. The mixture reacted at 20°C for 1.5h so that chlorodiphenylphosphine reacted completely to form diphenylphosphine sodium, the temperature was dropped to 0°C, 3.1g methyl *o*-chlorobenzoate was added, after reacting for 4h, methyl diphenylphosphinobenzoate was formed, and then concentrated hydrochloric acid was added to perform hydrolysis, followed by concentration, 3.1g *o*-diphenylphosphinobenzoic acid was obtained, HPLC = 99.1%, yield was 50.9%.

### Example 2

To 250ml three-necked bottle were added 50ml tetrahydrofuran and 1.1g metallic sodium, 4.4g chlorodiphenylphosphine. The mixture reacted at 35°C for 2.5h so that chlorodiphenylphosphine reacted completely to form diphenylphosphine sodium, the temperature was dropped to 0 °C , the resulted mixture was added to 100ml tetrahydrofuran system containing 6.3g lithium *o*-chlorobenzoate and reacted for 3h to form lithium diphenylphosphinobenzoate, and then concentrated hydrochloric acid was added to perform hydrolysis, followed by concentration, 3.1 g *o*-diphenylphosphinobenzoic acid was obtained, HPLC = 98.9%, yield was 50.5%.

### Example 3

To 250ml three-necked bottle were added 65ml tetrahydrofuran and 1.1g metallic sodium, 4.4g chlorodiphenylphosphine. The mixture reacted at 35°C for 2.5h so that chlorodiphenylphosphine reacted completely to form diphenylphosphine sodium, the temperature was dropped to 0°C, the resulted mixture was added to 100ml tetrahydrofuran system containing 7.6g sodium *o*-chlorobenzoate and reacted for 3h to form sodium diphenylphosphinobenzoate, and then dilute sulphuric acid(5% ∼ 30%) was added to perform hydrolysis, followed by concentration, 3.2g *o*-diphenylphosphinobenzoic acid was obtained, HPLC = 98.5%, yield was 52.5%.

### Example 4

To 250ml three-necked bottle were added 65ml tetrahydrofuran and 1.1g metallic sodium, 4.4g chlorodiphenylphosphine. The mixture reacted at 35°C for 2.5h so that chlorodiphenylphosphine reacted completely to form diphenylphosphine sodium, the temperature was dropped to 0°C, 8.0g potassium *o*-chlorobenzoate was added, after reacting for 5h, potassium diphenylphosphinobenzoate was formed, and then dilute phosphoric acid (5% ∼ 30%)was added to perform hydrolysis, followed by concentration, 3.4g *o*-diphenylphosphinobenzoic acid was obtained, HPLC = 99.0%, yield was 55.5%.

### Example 5

To 250ml three-necked bottle were added 28ml tetrahydrofuran and 2.1g metallic sodium, 8.8g chlorodiphenylphosphine. The mixture was refluxed at 65°C ∼ 66°C for 4h so that chlorodiphenylphosphine reacted completely to form diphenylphosphine sodium, the temperature was dropped to 25°C, 6.8g methyl *o*-chlorobenzoate was added, after reacting for 4h, methyl diphenylphosphinobenzoate was formed, and then sodium hydroxide was added to perform hydrolysis, followed by concentration, 6.5g *o*-diphenylphosphinobenzoic acid was obtained, HPLC = 99.0%, yield was 53.3%.

### Example 6

To 250ml three-necked bottle were added 70ml tetrahydrofuran and 0.8g metallic lithium, 8.8g chlorodiphenylphosphine. The mixture was heated to 50°C to react for 3h so that chlorodiphenylphosphine reacted completely to form diphenylphosphine lithium, the temperature was dropped to 30°C,10g methyl *o*-chlorobenzoate was added dropwise, after reacting for 15h, methyl diphenylphosphinobenzoate was formed, and then potassium hydroxide was added to perform hydrolysis, followed by concentration, 6.6g *o*-diphenylphosphinobenzoic acid was obtained, HPLC = 99.2%, yield was 54.1 %.

### Example 7

To 250ml three-necked bottle were added 88ml tetrahydrofuran and 2.5g metallic sodium, 8.8g chlorodiphenylphosphine. The mixture was heated to 60°C to react for 2h so that chlorodiphenylphosphine reacted completely to form diphenylphosphine sodium, the temperature was dropped to 20°C, the reacted product solution was dropwise added to 15g methyl *o*-chlorobenzoate in tetrahydrofuran, after reacting for 10h, methyl diphenylphosphinobenzoate was formed, and then acetic acid was added to perform hydrolysis, followed by concentration, 6.7g *o*-diphenylphosphinobenzoic acid was obtained, HPLC = 99.4%, yield was 55.0%.

### Example 8

To 250ml three-necked bottle were added 130ml n-butylether and 2.5g metallic sodium, 8.8g chlorodiphenylphosphine. The mixture was heated to 60°C to react for 2h, and then the temperature was dropped to 35°C, so that chlorodiphenylphosphine reacted completely to form diphenylphosphine sodium, the reacted product solution was dropwise added to 15g methyl *o*-chlorobenzoate in tetrahydrofuran, after reacting for 10h, methyl diphenylphosphinobenzoate was formed, and then sodium methoxide was added to perform hydrolysis, followed by concentration, 6.1g *o*-diphenylphosphinobenzoic acid was obtained, HPLC = 98.4%, yield was 48.7%.

### Example 9

To 500ml three-necked bottle were added 210ml 2-methyl tetrahydrofuran and 7.2g metallic potassium, 17.6g chlorodiphenylphosphine. The mixture was refluxed at 81 °C ∼83 °C for 2h so that chlorodiphenylphosphine reacted completely to form diphenylphosphine potassium, the temperature was dropped to 40°C, the reacted product solution was dropwise added to 30g ethyl *o*-chlorobenzoate in tetrahydrofuran, after reacting for 10h, ethyl diphenylphosphinobenzoate was formed, and then sodium ethoxide was added to perform hydrolysis, followed by concentration, 14.0g *o*-diphenylphosphinobenzoic acid was obtained, HPLC = 98.9%, yield was 57.1 %.

### Example 10

To 1000ml three-necked bottle were added 320ml 1,4-dioxane and 11.1g metallic sodium, 35.2g chlorodiphenylphosphine. The mixture reacted at 110°C for 2h so that chlorodiphenylphosphine reacted completely to form diphenylphosphine sodium, the temperature was dropped to 60°C, 40g methyl *o*-chlorobenzoate was added dropwise, after reacting for 10h, methyl diphenylphosphinobenzoate was formed, and then potassium carbonate was added to perform hydrolysis, followed by concentration, 26.4g *o*-diphenylphosphinobenzoic acid was obtained, HPLC = 98.5%, yield was 53.9%.

### Example 11

To 1000ml three-necked bottle were added 220ml 2-methyl tetrahydrofuran and 19.5g metallic potassium, 44.0g chlorodiphenylphosphine was added dropwise. The mixture was refluxed at 81 °C∼83°C for 2h so that chlorodiphenylphosphine reacted completely to form diphenylphosphine potassium, the temperature was dropped to 40 °C, the reacted product solution was dropwise added to 40g ethyl *o*-chlorobenzoate in tetrahydrofuran, after reacting for 10h, ethyl diphenylphosphinobenzoate was formed, and then sodium hydroxide was added to perform hydrolysis, followed by concentration, 36.9g *o*-diphenylphosphinobenzoic acid was obtained, HPLC = 99.5%, yield was 60.2%.

### Example 12

To 1000ml three-necked bottle were added 220ml 2-methyl tetrahydrofuran and 19.5g metallic potassium, 44.0g chlorodiphenylphosphine was added dropwise. The mixture was refluxed at 81 °C∼83°C for 2h so that chlorodiphenylphosphine reacted completely to form diphenylphosphine potassium, the temperature was dropped to 35 °C , the reacted product solution was dropwise added to 45g propyl *o*-chlorobenzoate in tetrahydrofuran, after reacting for 10h, propyl diphenylphosphinobenzoate was formed, and then sodium hydroxide was added to perform hydrolysis, followed by concentration, 37.3g *o*-diphenylphosphinobenzoic acid was obtained, HPLC = 99.1 %, yield was 60.9%.

### Example 13

To 1000ml three-necked bottle were added 400ml 2-methyl tetrahydrofuran and 11.5g metallic sodium, 44.0g chlorodiphenylphosphine was added dropwise. The mixture was refluxed at 81 °C∼83°C for 2h so that chlorodiphenylphosphine reacted completely to form diphenylphosphine sodium, the temperature was dropped to 30°C, the reacted product solution was dropwise added to 48g butyl *o*-chlorobenzoate in tetrahydrofuran, after reacting for 10h, butyl diphenylphosphinobenzoate was formed, and then potassium hydroxide was added to perform hydrolysis, followed by concentration, 38.0g *o*-diphenylphosphinobenzoic acid was obtained, HPLC = 99.0%, yield was 62.0%.

### Example 14

To 1000ml three-necked bottle were added 400ml 2-methyl tetrahydrofuran and 11.5g metallic sodium, 44.0g chlorodiphenylphosphine was added dropwise. The mixture was refluxed at 81°C∼83°C for 2h so that chlorodiphenylphosphine reacted completely to form diphenylphosphine sodium, the temperature was dropped to 25°C, the reacted product solution was dropwise added to 50g amyl *o*-chlorobenzoate in tetrahydrofuran, after reacting for 10h, amyl diphenylphosphinobenzoate was formed, and then sodium hydroxide was added to perform hydrolysis, followed by concentration, 37.6g *o*-diphenylphosphinobenzoic acid was obtained, HPLC = 99.3%, yield was 61.4%.

### Example 15

To 50L reactor were added 18L tetrahydrofuran and 0.408kg metallic sodium, 1.76kg chlorodiphenylphosphine was added dropwise. The mixture was refluxed at 65°C∼66 °C for 2h so that chlorodiphenylphosphine reacted completely to form diphenylphosphine sodium, the temperature was dropped to 25°C, the reacted product solution was dropwise added to 1.60kg ethyl *o*-chlorobenzoate in tetrahydrofuran, after reacting for 10h, ethyl diphenylphosphinobenzoate was formed, and then sodium hydroxide was added to perform hydrolysis, followed by concentration, 1.56kg *o*-diphenylphosphinobenzoic acid was obtained, HPLC = 99.6%, yield was 63.6%.

### Example 16

To 50L reactor were added 26.4L tetrahydrofuran and 0.408kg metallic sodium, 1.76kg chlorodiphenylphosphine was added dropwise. The mixture was refluxed at 65°C∼66°C for 2h so that chlorodiphenylphosphine reacted completely to form diphenylphosphine sodium, the temperature was dropped to 25°C, the reacted product solution was dropwise added to 1.60kg sodium *o*-chlorobenzoate in tetrahydrofuran, after reacting for 10h, sodium diphenylphosphinobenzoate was formed, and then sodium hydroxide was added to perform hydrolysis, followed by concentration, 1.59kg *o*-diphenylphosphinobenzoic acid was obtained, HPLC = 99.4%, yield was 64.9%.

### Example 17

To 50L reactor were added 25L 2-methyl tetrahydrofuran and 0.691kg metallic potassium, 1.76kg chlorodiphenylphosphine was added dropwise. The mixture was refluxed at 81°C∼83°C for 2h so that chlorodiphenylphosphine reacted completely to form diphenylphosphine sodium, the temperature was dropped to 25°C, the reacted product solution was dropwise added to 1.78kg potassium *o*-chlorobenzoate in tetrahydrofuran, after reacting for 10h, potassium diphenylphosphinobenzoate was formed, and then sodium hydroxide was added to perform hydrolysis, followed by concentration, 1.76kg *o*-diphenylphosphinobenzoic acid was obtained, HPLC = 99.5%, yield was 71.8%.

Indication: in each reaction step, reaction time should be properly controlled in order to ensure the reactions in each step are carried out effectively and completely. Since reaction rate are affected by a variety of factors including reactants and their ratio, concentration, temperature and flow, the best reaction time is generally determined on the basis of the test results of the reactants and products in the system.

In the above examples, the various alkali metal can be substituted with lithium, sodium and potassium and other alkali metals, combinations of any ratio of these substances can also be used, for example, 50% lithium and 50% sodium, 40% sodium and 60% potassium, 55% lithium and 45% potassium, 10% potassium, 20% sodium and 70% potassium, etc..

In the above examples, tetrahydrofuran, 2-methyl tetrahydrofuran, n-butylether, or 1, 4-dioxane, etc. used as solvent can also be substituted with substances other solvents in tetrahydrofuran, 2-methyl tetrahydrofuran, n-butylether, and 1,4-dioxane, or other ethers that can be used as solvent, or any other suitable solvents. The applicability of a variety of solvents in the present invention can be determined in accordance with simple dissolution and reaction experiments the present invention involves.

In the above examples, lithium *o*-chlorobenzoate, sodium *o*-chlorobenzoate, potassium *o*-chlorobenzoate, and other *o*-chlorobenzoic acid salts can also be substituted with other substances in lithium *o*-chlorobenzoate, sodium *o*-chlorobenzoate and potassium *o*-chlorobenzoate, or other *o*-chlorobenzoic acid salts. The applicability of a variety of *o*-chlorobenzoic acid salts in the present invention can be determined in accordance with simple dissolution and reaction experiments the present invention involves.

In the above examples, methyl *o*-chlorobenzoate, ethyl *o*-chlorobenzoate, propyl *o*-chlorobenzoate, butyl *o*-chlorobenzoate, amyl *o*-chlorobenzoate and other *o*-chlorobenzoic acid esters can also be substituted with other substances in methyl *o*-chlorobenzoate, ethyl *o*-chlorobenzoate, propyl *o*-chlorobenzoate, butyl *o*-chlorobenzoate and amyl *o*-chlorobenzoate, or other *o*-chlorobenzoic acid esters. The applicability of a variety of *o*-chlorobenzoic acid esters in the present invention can be determined in accordance with simple dissolution and reaction experiments the present invention involves.

In the above examples, acid and alkali used for hydrolysis can be substituted with a variety of acids and alkalies used for hydrolysis in prior art. The applicability of a variety of acids and alkalies in the present invention can be determined in accordance with simple hydrolysis experiments the present invention involves. According to the above examples, the present method can be applied to large-scale production, or other specific embodiments in the present invention can be used to implement large-scale production.

### INDUSTRIAL APPLICABILITY

The method for synthesis of *o*-diphenylphosphinobenzoic acid in the present invention includes the steps as follows: using chlorodiphenylphosphine as starting material, chlorodiphenylphosphine and alkali metal are added to a solvent to conduct cracking, which produces a diphenylphosphine alkali metal salt, then *o*-chlorobenzoic acid salt or *o*-chlorobenzoic acid ester is added to conduct coupling reaction to produce diphenylphosphinobenzoic acid salt or diphenylphosphinobenzoic acid ester, *o*-diphenylphosphinobenzoic acid is obtained after hydrolysis. In the present invention, the starting materials are inexpensive and industrialized chlorodiphenylphosphine and *o*-chlorobenzoic acid, which are beneficial to ensure supply of raw materials and reduce the cost of production; a variety of reactions can be carried out at atmospheric pressure, along with simple processes, less energy consumption, and convenient operation, which makes the present method is suitable for industrial-scale production; the products have high yield, generally can reach 50 ∼ 75%; and the product quality is good, the testing results of products showed HPLC normalized purity was above 99%, oxide content was less than 0.5%, a single unknown impurity was less than 0.2%.

## Claims

1. A method for synthesis of *o*-diphenylphosphinobenzoic acid, **characterized in that** it includes the following steps: producing diphenylphosphine alkali metal salt by adding chlorodiphenylphosphine and alkali metal to a solvent to conduct cracking reaction, and then producing diphenylphosphinobenzoic acid salt or diphenylphosphinobenzoic acid ester by adding *o*-chlorobenzoic acid salt or *o*-chlorobenzoic acid ester to conduct coupling reaction, thus obtaining *o*-diphenylphosphinobenzoic acid after hydrolysis.

2. The method for synthesis of *o*-diphenylphosphinobenzoic acid as claimed in claim 1, **characterized in that**, said cracking reaction time is 1 - 6h; said coupling reaction time is 2-24h; said hydrolysis is carried out by adding acid or alkali.

3. The method for synthesis of *o*-diphenylphosphinobenzoic acid as claimed in claim 1 or 2, **characterized in that**, said alkali metal is selected from the group consisting of lithium, sodium or potassium, or a combination of any ratio thereof.

4. The method for synthesis of *o*-diphenylphosphinobenzoic acid as claimed in any one of claims 1 to 3, **characterized in that**, said solvent is selected from ethers.

5. The method for synthesis of *o*-diphenylphosphinobenzoic acid as claimed in claim 4, **characterized in that**, said ethers are selected from the group consisting of tetrahydrofuran, 2- methyltetrahydrofuran, n-butylether, or 1,4-dioxane.

6. The method for synthesis of *o*-diphenylphosphinobenzoic acid as claimed in any one of claims 1 to 5, **characterized in that**, said *o*-chlorobenzoic acid salt is selected from the group consisting of lithium *o*-chlorobenzoate, sodium *o*-chlorobenzoate, or potassium *o*-chlorobenzoate.

7. The method for synthesis of *o*-diphenylphosphinobenzoic acid as claimed in any one of claims 1 to 6, **characterized in that**, said *o*-chlorobenzoic acid ester is selected from the group consisting of methyl *o*-chlorobenzoate, ethyl *o*-chlorobenzoate, propyl *o*-chlorobenzoate, butyl o*o*-chlorobenzoate, or amyl *o*-chlorobenzoate.

8. The method for synthesis of *o*-diphenylphosphinobenzoic acid as claimed in any one of claims 1 to 7, **characterized in that**, said cracking is carried out by reflux reaction, the molar ratio of the said chlorodiphenylphosphine and alkali metal is 1:2∼1:6, preferably, 1:3∼1:4, the volume mass ratio (ml/g) of said solvent and chlorodiphenylphosphine is 3:1∼15:1, preferably, 5:1∼12:1, more preferably, 8:1∼10:1 ,the reaction temperature is 20∼110°C , preferably, 30∼100°C , more preferably, 50∼100°C, the most preferably, 80∼90°C.

9. The method for synthesis of *o*-diphenylphosphinobenzoic acid as claimed in any one of claims 1 to 8, **characterized in that**, the molar ratio of *o*-chlorobenzoic acid salt or *o*-chlorobenzoic acid ester and chlorodiphenylphosphine is 1:1∼4:1, preferably, 2:1 ∼ 3:1, more preferably, 2.5:1 ∼ 3 :1, said *o*-chlorobenzoic acid salt or ester is added by the way of add-on or add-back, the reaction temperature is 0∼60°C, preferably, 10∼50°C, more preferably, 20∼40°C, most preferably, 25∼35°C.

10. The method for synthesis of o-diphenylphosphinobenzoic acid as claimed in any one of claims 1 to 9, **characterized in that**, said hydrolysis is carried out by the way of acid hydrolysis or alkali hydrolysis.
